Europäisches Patentamt

European Patent Office

Office européen des brevets

(11) Veröffentlichungsnummer: **0 261 694**

**A1**

# (12) EUROPÄISCHE PATENTANMELDUNG

(21) Anmeldenummer: 87114078.6

(22) Anmeldetag: 26.09.87

(51) Int. Cl.⁴: **A01D 34/64** , A01D 34/63

(30) Priorität: 26.09.86 DE 3632871

(43) Veröffentlichungstag der Anmeldung:
30.03.88 Patentblatt 88/13

(84) Benannte Vertragsstaaten:
AT BE CH DE ES FR GB GR IT LI LU NL SE

(71) Anmelder: **Fischer, Helmut**
**Niedere Klinge 18**
**D-7121 Gemmrigheim(DE)**

(72) Erfinder: **Fischer, Helmut**
**Niedere Klinge 18**
**D-7121 Gemmrigheim(DE)**

(74) Vertreter: **Kastner, Hermann, Dipl.-Ing.**
**Osterholzallee 89**
**D-7140 Ludwigsburg(DE)**

(54) **Sichelmähgerät.**

(57) Bei dem Sichelmähgerät (10) ist an einem Anbaubock (11) für die Koppelung des Gerätes mit einem Trägerfahrzeug (14) ein Grundgestell (15) angeordnet. Daran ist ein Mähgehäuse (18) um eine lotrecht ausgerichtete Schwenkachse (17) schwenkbar gelagert. Das Mähgehäuse (18) wird mittels einer Schwenkvorrichtung (37) gegenüber dem Grundgestell (15) auf bestimmte Schwenkstellungen eingestellt. Im Mähgehäuse (18) sind zwei oder mehr Mähköpfe (21; 22) mit lotrecht ausgerichteter Drehachse drehbar gelagert. Die Mähköpfe (21; 22) sind mit einem Verzweigungsgetriebe (32) gekuppelt, das am Mähgehäuse (18) angeordnet ist und das mit einem Winkelgetriebe (28) gekuppelt ist, das auf dem Mähgehäuse (18) angeordnet ist. Das Winkelgetriebe (28) ist mit einer Zapfwelle des Trägerfahrzeuges (14) kuppelbar.

Fig. 1

## Sichelmähgerät

Sichelmähgeräte, die manchmal auch als Sichelmulchgeräte bezeichnet werden, werden hauptsächlich in Rebanlagen oder Obstbaumanlagen oder dergleichen eingesetzt, um die Bodenflächen zwischen den in Reihen gepflanzten Rebstöcken oder Obstbäumen zu bearbeiten, und zwar insbesondere den dort vorhandenen Pflanzenbewuchs auf einer erträglichen Höhe zu halten oder auf eine erträgliche Höhe zu bringen. Zu diesem Zweck wird ein solches Sichelmähgerät an einen Schlepper angebaut. Es weist zwei oder mehr Mähköpfe auf, die in einem Mähgehäuse drehbar gelagert sind. Über die Zapfwelle des Schleppers, über ein Winkelgetriebe und über ein Verzweigungsgetriebe werden die Mähköpfe angetrieben. Durch Führungselemente in Form eines Spornrades oder in Form von Kufen oder von Führungstellern wird das Mähgehäuse auf einer bestimmten Höhenstellung gehalten.

Bei den Rebanlagen oder Obstbaumanlagen strebt man zwar einen bestimmten einheitlichen Reihenabstand für die Rebstöcke oder Obstbäume an. Dieser Reihenabstand kann dennoch von Anlage zu Anlage unterschiedlich sein. Außerdem kann es auf Grund des Geländeverlaufes manchmal schwierig sein, einen gleichbleibenden Abstand überhaupt einzuhalten. Für solche Fälle ist es wünschenswert, wenn die Arbeitsbreite des Sichelmähgerätes sich innerhalb eines gewissen Bereichs entsprechend dem Bedarf einstellen läßt. Dazu gibt es Sichelmähgeräte, bei denen an den beiden Querseiten des Mähgehäuses mit den Hauptmähköpfen je ein weiterer Mähkopf über einen Schwenkarm mit lotrechter Schwenkachse am Mähgehäuse angelenkt ist. Dadurch können diese zusätzlichen Mähköpfe über die Arbeitsbreite der Hauptmähköpfe hinaus nach außen geschwenkt werden und dadurch die Gesamtarbeitsbreite des Sichelmähgerätes entsprechend verändert werden. Allein schon diese Schwenklagerung mit einer mechanischen oder hydraulischen Schwenkeinrichtung für die Schwenkarme stellt einen erheblichen Bauaufwand dar, der beträchtliche Kosten verursacht und der außerdem eine erhebliche Störanfälligkeit solcher Sichelmähgeräte mit sich bringt. Außerdem werden diese zusätzliche Mähköpfe entweder vom Winkelgetriebe oder vom Verzweigungsgetriebe der Hauptmähköpfe aus über je einen eigenen Antrieb angetrieben. Im Hinblick auf die Schwenkbarkeit der zusätzlichen Mähköpfe müßen auch die Antriebe schwenkbar ausgeführt werden. Dazu werden manchmal Riementriebe oder Kettentriebe und manchmal Königswellen mit Winkelgetrieben oder manchmal auch biegsame Wellen verwendet. In allen Fällen bedeuten diese zusätzlichen Antriebe einen entsprechend hohen Kostenaufwand und eine zusätzliche erhebliche Störanfälligkeit dieser Sichelmähgeräte. Soweit Antriebe mit formschlüssigen Antriebselementen wie Zahnräder oder Kettenräder verwendet werden, erzeugen diese Antriebe meist auch starke Geräusche.

Der Erfindung liegt die Aufgabe zugrunde, ein Sichelmähgerät zu schaffen, bei dem der mechanische Aufwand für die Verstellbarkeit der Arbeitsbreite geringer ist als bei den bekannten Geräten.

Diese Aufgabe wird durch ein Sichelmähgerät mit den im Anspruch 1 angegebenen Merkmalen gelöst.

Dadurch, daß das Mähgehäuse mit den Mähköpfen nicht starr mit dem Anbaubock verbunden ist, sondern schwenkbar an einem Grundgestell gelagert ist, das seinerseits mit dem Anbaubock starr verbunden ist, kann das Mähgehäuse gegenüber dem Anbaubock und damit gegenüber dem Schlepper und dessen Bewegungsrichtung verschwenkt werden. Dadurch kann das Mähgehäuse einmal so eingestellt werden, daß die Mähköpfe in der Bewegungsrichtung hintereinander liegen und ihre Gesamtarbeitsbreite nicht größer als der Durchmesser des größten Mähkopfes ist. Ein anderes Mal kann das Mähgehäuse in eine solche Schwenkstellung gebracht werden, daß die Mähköpfe praktisch nebeneinander liegen und dadurch ihre Gesamtarbeitsbreite gleich der Summe der Arbeitsbreiten sämtlicher Mähköpfe ist, d.h. gleich der Summe der Durchmesser der Mähköpfe ist. Durch die Schwenkvorrichtung kann das Mähgehäuse auf eine ganz bestimmte Schwenkstellung und damit auf eine ganz bestimmte Arbeitsbreite eingestellt werden, die sie während des Betriebes aufrechterhält.

Wenn das Sichelmähgerät mit mehr als 2 Mähköpfen, beispielsweise mit 3 oder 4 Mähköpfen, ausgerüstet wird, die entweder in einer Reihe oder mit geringem gegenseitigen Versatz in der Längsrichtung nebeneinander angeordnet werden, kann mit einem einzigen starren Mähgehäuse eine verhältnismäßig große Gesamtarbeitsbreite erreicht werden, die lediglich durch Verschwenken des einzigen Mähgehäuses auf einen sehr geringen Kleinstwert verändert werden kann. Durch eine entsprechende Betätigung der Schwenkvorrichtung kann das Sichelmähgerät auf jede zwischen dem Größtwert und dem Kleinstwert liegende Arbeitsbreite sehr leicht eingestellt werden. Die feste Zuordnung aller Teile am Mähgerät erlaubt ist, diese Teile sehr robust auszuführen. Dieses Sichelmähgerät ist daher sehr wenig störanfällig und sehr betriebssicher.

Bei einer Ausgestaltung des Sichelmähgerätes nach Anspruch 2 wird eine leichte Verschwenkbarkeit des Mähgehäuses erreicht. Dieses Schwenklager hat einen sehr großen Lastaufnahmedurchmesser, weshalb die einzelnen Teile des Schwenklagers nur verhältnismäßig gering belastet werden und daher das Schwenklager sehr robust und wenig störanfällig ist. Auf Grund der geringen Belastung der Einzelteile dieses Schwenklagers tritt nur ein geringer Verschleiß des Kugeldrehkranzes auf, was eine sehr hohe Lebensdauer ergibt.

Bei einer Ausgestaltung des Sichelmähgerätes nach Anspruch 3 erhält man eine sehr einfach und billig herzustellende Schwenkvorrichtung, die sich von Hand auf verschiedene Stufen der Schwenkstellung des Mähgehäuses verhältnismäßig leicht einstellen läßt. Diese Schwenkvorrichtung ist sehr robust und betriebssicher. Bei einer alternativen Ausgestaltung des Sichelmähgerätes nach Anspruch 4 kann das Mähgehäuse mittels der hydraulisch wirkenden Schwenkvorrichtung vom Schlepper aus betätigt werden, wenn der Kolbenantrieb in herkömmlicher Weise mit dem Hydrauliksystem des Schleppers verbunden ist. Dann kann der Schlepperfahrer während der Fahrt die Arbeitsbreite ändern. Das erleichtert den Einsatz des Sichelmähgerätes vor allem dann, wenn z.B. auf Grund der Geländeform der Reihenabstand der Rebanlage oder Obstbaumanlage nicht gleichmäßig ist.

Bei einer Ausgestaltung des Sichelmähgerätes nach Anspruch 5 wird erreicht, daß durch die geringe Schrägstellung des Mähgehäuses in der Endstellung für die größtmögliche Arbeitsbreite die Arbeitsbereiche der einzelnen Mähköpfe einander überdecken, auch wenn der Abstand der Drehachsen der Mähköpfe größer ist als die Summe ihrer Halbmesser, also die kreisförmigen Bewegungsflächen der Mähköpfe einander nicht überdecken. Dadurch benötigen die Mähköpfe keinen Zwangsantrieb, der dafür sorgt, daß ihre einzelnen Messer nicht aufeinander treffen. Sie können unabhängig voneinander frei angetrieben werden. Die dafür verwendeten Keilriementriebe ergeben einen sehr robusten und wenig störanfälligen Antrieb, der außerdem eine gewisse Elastizität für jeden einzelnen Mähkopf bringt und der vor allem erheblich weniger Geräusche entwickelt als etwa Zwangsantriebe mit Zahnrädern oder Kettenrädern.

Die Erfindung wird im folgenden anhand zweier in der Zeichnung dargestellter Ausführungsbeispiele näher erläutert. Es zeigen:

Fig. 1 eine Draufsicht eines Sichelmähgerätes in einer bestimmten Schwenkstellung mit einer teilweise dargestellten Draufsicht eines Schleppers;

Fig. 2 eine Rückansicht des Sichelmähgerätes nach Fig. 1

Fig. 3 eine Draufsicht des Sichelmähgerätes nach Fig. 1 in einer anderen Schwenkstellung;

Fig. 4 und 5 je eine Draufsicht eines abgewandelten Sichelmähgerätes in zwei verschiedenen Schwenkstellungen.

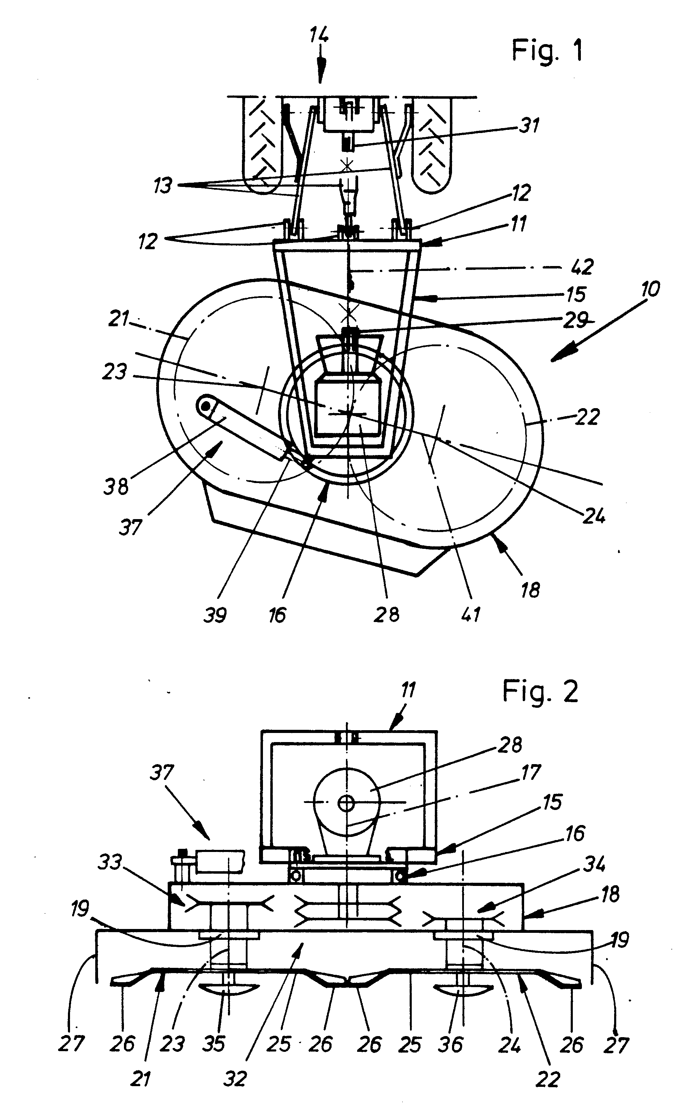

Das Sichelmähgerät 10 weist einen Anbaubock 11 auf, der als Dreipunkt-Anbaubock ausgebildet ist. Dieser ist mit Koppelelementen 12 versehen, über die er in herkömmlicher Weise mit dem Koppelgestänge 13 eines Schleppers 14 verbunden werden kann. Der Anbaubock 11 ist mit einem rahmenartigen Grundgestell 15 fest verbunden. An diesem Grundgestell 15 ist in einigem Abstand vom Anbaubock 11 ein Schwenklager 16 in Form eines Kugeldrehkranzes angeordnet, dessen Schwenkachse 17 lotrecht ausgerichtet ist. Mit dem bewegbaren Teil des Schwenklagers 16 ist ein Mähgehäuse 18 fest verbunden, das aus Stahlprofilteilen und Stahlblechteilen hergestellt ist und dessen tragende Teile starr ausgebildet sind. Der Gesamtgrundriß des Mähgehäuses 18 hat eine langgrunde Form (Fig. 1). Am Mähgehäuse 18 sind mittels je eines Drehlagers 19 zwei Mähköpfe 21 und 22 drehbar gelagert, deren Drehachse 23 bzw. 24 lotrecht und damit parallel zur Schwenkachse 17 des Mähgehäuses 18 ausgerichtet sind. Die Schwenkachse 17 des Mähgehäuses 18 ist in dem Bereich zwischen den Drehachsen 23 und 24 der Mähköpfe 21 und 22 angeordnet, und zwar vorzugsweise auf der Mittelsenkrechten der Verbindungsstrecke der Drehachsen 23 und 24. Die Mähköpfe 21 und 22 weisen in herkömmlicher Bauart an den Enden eines Doppelarmes 25 je ein Schlagmesser 26 auf.

Das Mähgehäuse 18 ist in Form einer umlaufenden Schürze 27 bis über die Bewegungsebene der Schlagmesser 26 herabgezogen.

Auf dem Grundgestell 15 ist ein Winkelgetriebe 28 angeordnet, das einen Wellenstummel 29 aufweist, der dem Schlepper 14 zugekehrt ist. Über diesen Wellenstummel 29 und eine nicht dargestellte Steckwelle kann das Winkelgetriebe 28 mit der Zapfwelle 31 des Schleppers 14 gekuppelt werden. An das Winkelgetriebe 28 ist ein Verzweigungsgetriebe 32 angeschlossen, das durch zwei Keilriementriebe 33 und 34 gebildet wird. Die Antriebsriemenscheiben dieser Keilriementriebe sitzen auf der Abtriebswelle des Winkelgetriebes 28. Die Abtriebsriemenscheibe sitzt jeweils auf der Drehachse 23 bzw. der Drehachse 24 der Messerköpfe 21 und 22.

Beide Mähköpfe 21 und 22 sind mit je einem Führunsteller 35 bzw. 36 ausgerüstet, der in der Fluchtlinie der Drehachse 23 bzw. 24 gegenüber dem zugehörigen Mähkopf frei drehbar gelagert ist. Die Führungsteller 35 und 36 haben eine ballige oder kegelstumpfförmige Außenseite. Diese hat von der Bewegungsebene der Schlagmesser 26 einen bestimmten Abstand, der entweder fest eingestellt ist oder der mittels entsprechender Vorrichtungen eingestellt werden kann. Beim Betrieb des Sichelmähgerätes 10 wird dieses soweit abgesenkt, bis die Führungsteller 35 und 36 am Boden aufliegen. Bei der Fortbewegung des Sichelmähgerätes 10 wälzen sich die Führungsteller 35 und 36 auf den ihnen jeweils am nächsten gelegenen Stellen des Bodens ab und halten dadurch das Sichelmähgerät 10 in einem zumindest einigermaßen gleichbleibendem Abstand vom Boden.

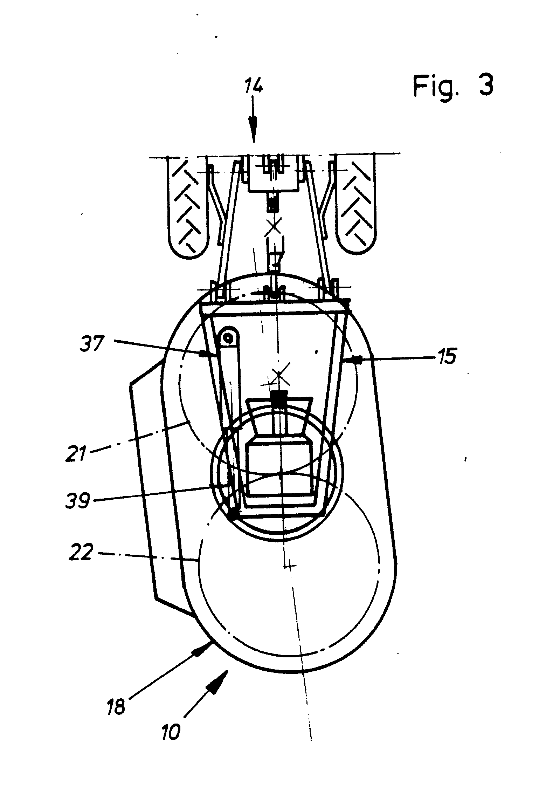

Das Mähgehäuse 18 wird mittels einer Schwenkvorrichtung 37 (Fig. 1) gegenüber dem Grundgestell 15 in eine bestimmte Schwenkstellung gebracht (Fig. 1 und 3). Diese Schwenkvorrichtung weist einen hydraulischen Kolbenantrieb auf. Dessen Arbeitszylinder 38 ist an seinem Boden mit dem Mähgehäuse 18 gelenkig verbunden. Die Kolbenstange 39 ist mit dem Grundgestell 15 gelenkig verbunden. Dieser Kolbenantrieb der Schwenkvorrichtung 37 wird in nicht dargestellter Weise über Hydraulikleitungen mit herkömmlichen Steckkupplungen mit der Hydraulikanlage des Schleppers 14 verbunden und über ein zugehöriges Steuerventil vom Fahrersitz aus betätigt.

Über die Schwenkvorrichtung 37 kann das Mähgehäuse 18 in jede gewünschte Schwenkstellung zwischen den beiden Endstellungen (Fig. 1 und Fig. 3) eingestellt werden.

Die Schwenkvorrichtung 37 kann so ausgebildet und angeordnet werden, daß in der einen Endstellung ihres Arbeitskolbens das mit ihr gekoppelte Mähgehäuse 18 eine solche Schwenkstelung einnimmt, in der die Verbindungslinie 41 der Drehachsen 23 und 24 der Mähköpfe 21 und 22 mit der Längsachse 42 des Grundgestelles 15 einen Winkel einschließt, der kleiner als 90° ist. Dadurch wird erreicht, daß die kreisrunden Bewegungsbereiche der beiden Mähköpfe 21 und 22 bei der Fortbewegung des Sichelmähgerätes 10 in Richtung der Längsachse 42 zwei streifenförmige Arbeitsflächen erzeugen, die an den einander zugekehrten Rändern einander überdecken, obwohl der Abstand der beiden Drehachsen 23 und 24 größer ist als die Summe der Halbmesser der beiden Mähköpfe 21 und 22, so daß deren Bewegungsbereiche einander nicht überdecken. In diesem Falle dient die Schwenkvorrichtung 37 zugleich als Schwenkanschlag für das Mähgehäuse. Selbstverständlich kann der Schwenkanschlag auch durch andere Teile, insbesondere durch mechanische Anschlagteile, verwirklicht werden.

Aus Fig. 3 ist ersichtlich, daß das Mähgehäuse 18 gegenüber dem Grundgestell 15 in eine Schwenkstellung gebracht werden kann, in der die Arbeitsbreite des Sichelmähgerätes 10 praktisch so gering wie die Arbeitsbreite eines der beiden Mähköpfen 21 und 22 allein ist.

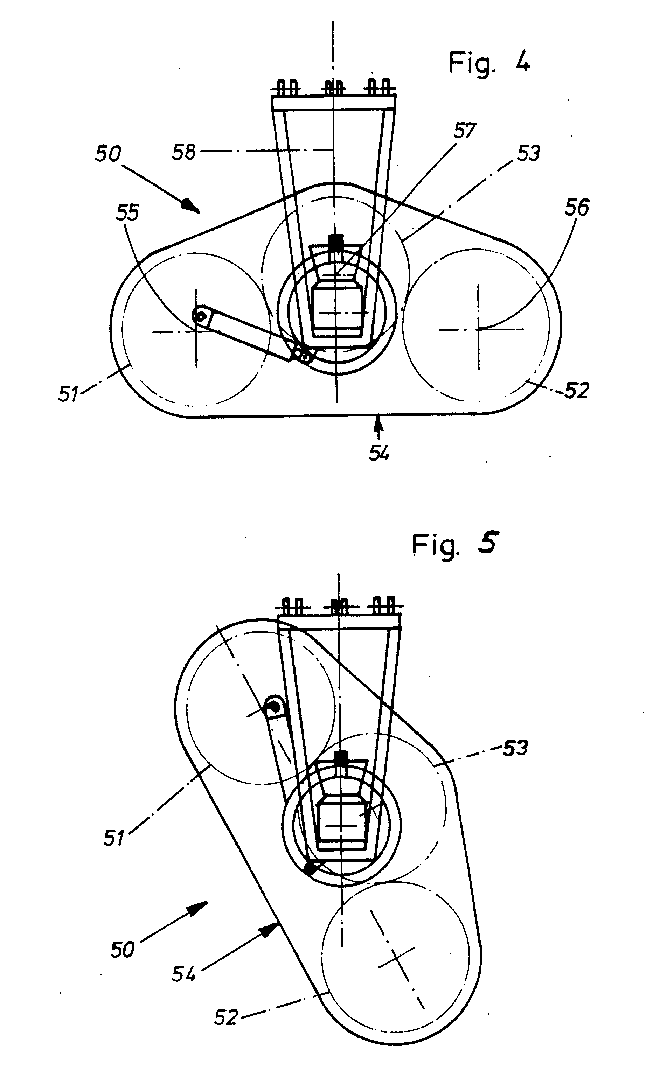

Aus Fig. 4 und 5 ist ein Sichelmähgerät 50 ersichtlich, das gegenüber dem Sichelmähgerät 10 im wesentlichen dahingehend abgewandelt ist, daß es drei Mähköpfe 51, 52 und 53 aufweist, die in einem gemeinsamen Mähgehäuse 54 drehbar gelagert sind. Die Drehachsen 55 ... 57 der drei Mähköpfe 51 ... 53 sind nicht in einer Linie, sondern an den Ecken eines gleichschenkligen stumpfen Dreieckes angeordnet, wie aus Fig. 4 ersichtlich ist. Dementsprechend hat auch das Mähgehäuse 54 eine Grundrißform, die ein gleichschenkliges stumpfes Dreieck mit abgerundeten Ecken darstellt. Durch diese versetzte Anordnung der Drehachsen 55 ... 57 tritt eine Überdeckung der Arbeitsflächen der drei Mähköpfe 51 ... 53 auch dann ein, wenn das Mähgehäuse 54 rechtwinklig zur Längsachse 58 ausgerichtet ist (Fig. 4), bei dem also die Verbindungslinie der Drehachse 55 und der Drehachse 56 der beiden außengelegenen Mähköpfe 51 und 52 die Längsachse 58 rechtwinklig schneidet. Die Schwenkachse des Mähgehäuses liegt auch hier vorzugsweise auf der Mittelsenkrechten der Verbindungsstrecke der Drehachsen 55 und 56 der beiden außengelegenen Mähköpfe 51 und 52. Im übrigen ist das Sichelmähgerät 50 gleich oder zumindest ähnlich dem Sichelmähgerät 10 ausgebildet, so daß in soweit dessen Beschreibung auch hier zumindest sinngemäß gilt.

Das Sichelmähgerät 50 hat durch drei Mähköpfe 51 ... 53 von vornherein eine größere Arbeitsbreite als das Sichelmähgerät 10, vorausgesetzt, daß die Mähköpfe beider Sichelmähgeräte je für sich die gleichen Abmessungen haben. Auf Grund der größeren Gesamtarbeitsbreite des Sichelmähgerätes 50 wird es im allgemeinen nicht erforderlich sein, daß seine geringstmögliche Gesamtarbeitsbreite bis auf die Arbeitsbreite eines einzigen seiner Mähköpfe verringert wird. Daher wird es im allgemeinen genügen, wenn das Sichelmähgerät 50 in eine Endstellung gemäß Fig. 5 verschwenkt wird, in der seine Gesamtarbeitsbreite wohl größer als die Arbeitsbreite eines Mähkopfes, aber geringer als die zweifache Arbeitsbreite eines Mähkopfes ist.

Falls von einem Sichelmähgerät wie dem Sichelmähgerät 50 mit drei oder auch mit vier Mähköpfen gefordert wird, daß seine geringstmögliche Gesamtarbeitsbreite nicht oder nicht wesentlich größer als die Arbeitsbreite eines seiner Mähköpfe ist, dann können die Mähköpfe in einer Reihe angeordnet werden, wie das bei dem Sichelmähgerät 10 der Fall ist. Soweit dabei eine lückenlose Arbeitsfläche verlangt wird, ohne daß die einzelnen Arbeitsbereiche der Mähköpfe einander überdecken, damit für das Verzweigungsgetriebe Keilriementriebe verwendet werden können, dann kann die Schwenkstellung des Mähgehäuses 54 in der einen Endstellung auf einen Winkelwert unter 90° eingestellt werden, wie das bei dem Sichelmähgerät 10 aus Fig. 1 ersichtlich ist.

Ähnliche Verhältnisse ergeben sich, wenn in einer weiteren Abwandlung das Sichelmähgerät mit mehr als drei Mähköpfen ausgeführt wird.

## Ansprüche

1. Sichelmähgerät mit den Merkmalen:
-ein Anbaubock ist mit Kopplungselementen für eine lösbare Koppelung mit einem Schlepper oder dergleichen versehen,
-mit dem Anbaubock ist ein Mähgehäuse verbunden,
-das Mähgehäuse ist mittels eines oder mehrerer Führungselemente auf eine bestimmte Arbeitshöhe über dem Boden einstellbar,
-am Mähgehäuse sind zwei oder mehr Mähköpfe drehbar gelagert, deren Drehachse lotrecht ausgerichtet ist,
-die Mähköpfe sind mit einem Verzweigungsgetriebe gekuppelt, das am Mähgehäuse befestigt ist,
-das Verzweigungsgetriebe ist mit einem Winkelgetriebe gekuppelt, das auf der Oberseite des Mähgehäuse angeordnet ist,
-das Winkelgetriebe ist mit einer Zapfwelle des Schleppers kuppelbar,
gekennzeichnet durch die Merkmale:
-am Anbaubock (11) ist ein Grundgestell (15) angeordnet,
-das Mähgehäuse (18) ist am Grundgestell (15) mittels eines Schwenklagers (16) schwenkbar gelagert, dessen Schwenkachse (17) lotrecht ausgerichtet ist,
-es ist eine Schwenkvorrichtung (37) vorhanden, mittels der das Mähgehäuse (18) gegenüber dem Grundgestell (15) auf bestimmte Schwenkstellungen einstellbar ist.

2. Sichelmähgerät nach Anspruch 1,
gekennzeichnet durch das Merkmal:
-das Schwenklager (17) zwischen dem Mähgehäuse (18) und dem Grundgestell (15) ist als Kugeldrehkranz ausgebildet

3. Sichelmähgerät nach Anspruch 1 oder 2,
gekennzeichnet durch die Merkmale:
-die Schwenkvorrichtung weist eine Einstellasche auf, die an einem Ende entweder mit dem Mähgehäuse oder mit dem Grundgestell gelenkig verbunden ist und die eine Reihe von Einstellöchern aufweist, mittels der die Einstellasche mit dem entsprechenden anderen Tel, d.h. mit dem Grundgestell bzw. mit dem Mähgehäuse, in unterschiedlichen Schwenkstellungen verbindbar ist.

4. Sichelmähgerät nach Anspruch 1 oder 2,
gekennzeichnet durch das Merkmal:
-die Schwenkvorrichtung (37) weist einen doppeltwirkenden hydraulischen Kolbenantrieb auf, dessen Arbeitszylinder (38) an seinem Boden mit dem Mähgehäuse (18) gelenkig verbunden ist und dessen Kolbenstange (39) mit dem Grundgestell (15) gelenkig verbunden ist.

5. Sichelmähgerät nach einem der Ansprüche 1 bis 4,
gekennzeichnet durch die Merkmale:
-zwischen dem Mähgehäuse (18) und dem Grundgestell (15) ist ein Schwenkanschlag (37) vorhanden, mittels dessen die eine Schwenkbewegung des Mähgehäuses (18) auf eine Schwenkstellung begrenzbar ist, in der die Verbindungslinie (41) der Drehachsen (23; 24) der Mähköpfe (21; 22) mit der Längsachse (42) des Grundgestells (15) einen Winkel einschließt, der kleiner als 90° ist,
-die Drehachsen (23; 24) der Mähköpfe (21; 22) haben einen gegenseitigen Abstand, der geringfügig größer als die Summe der Halbmesser der Mähköpfe (21; 22) ist,
-das Verzweigungsgetriebe (32) wird durch Keilriementriebe (33; 34) gebildet.

Fig. 1

Fig. 2

Fig. 3

Fig. 4

Fig. 5

**EUROPÄISCHER RECHERCHENBERICHT**

| | EINSCHLÄGIGE DOKUMENTE | | EP 87114078.6 |

**EINSCHLÄGIGE DOKUMENTE** — EP 87114078.6

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US - A - 3 750 376 (CIONI) <br> * Fig. 1,2 * <br> -- | 1,2,5 | A 01 D 34/64 <br> A 01 D 34/63 |
| A | US - A - 3 526 083 (R.O. BARRY et al.) <br> * Fig. 4,5,10,11 * <br> -- | 1,2,5 | |
| A | US - A - 2 732 675 (A. SMITH et al.) <br> * Fig. 1,2 * <br> -- | 1,2 | |
| A | US - A - 4 147 227 (VAN DER LELY) <br> * Fig. 1,2 * <br> -- | 1 | |
| A | DE - A1 - 2 840 691 (BRUNS) <br> * Fig. 1; Ansprüche 1,4 * <br> -- | 1 | |
| A | AT - B - 224 377 (MASCHINEN- UND APPARETEBAU OHG) <br> * Fig. 1 * <br> -- | 1 | |
| A | US - A - 3 241 302 (R.O. BARRY) <br> * Fig. 4,6 * <br> ---- | 1 | |

**RECHERCHIERTE SACHGEBIETE (Int. Cl.4)**

A 01 D 34/00

Der vorliegende Recherchenbericht wurde für alle Patentansprüche erstellt.

| Recherchenort | Abschlußdatum der Recherche | Prüfer |
|---|---|---|
| WIEN | 26-11-1987 | HAVLIK |